# EUROPÄISCHE PATENTSCHRIFT

(11) **EP 1 275 537 B1**
(45) Veröffentlichungstag und Bekanntmachung des Hinweises auf die Patenterteilung: **26.11.2003**
(21) Anmeldenummer: 02015715.2
(22) Anmeldetag: 12.07.2002
(51) Int. Cl.: B60H 1/22, F23N 5/02

(54) **Verfahren zum Betreiben einer Heizeinrichtung und Heizeinrichtung**
Method for controlling a heating appliance and heating appliance
Méthode de commande d'un élément de chauffage et élément de chauffage

(30) Priorität: 12.07.2001 DE 10133999
(43) Veröffentlichungstag der Anmeldung: 15.01.2003
(73) Patentinhaber: J. Eberspächer GmbH & Co. KG, 73730 Esslingen (DE)
(72) Erfinder: Krämer, Michael, 70193 Stuttgart (DE); Knies, Tobias, 71394 Kernen (DE); Pfister, Wolfgang, 73732 Esslingen (DE)
(74) Vertreter: Ruttensperger, Bernhard, Dipl.-Phys.

(56) Entgegenhaltungen:
- EP-A- 0 346 135
- EP-A- 0 892 215
- WO-A-95/18023
- DE-A- 3 517 954
- DE-A- 19 524 260

## Beschreibung

Die vorliegende Erfindung betrifft ein Verfahren zum Betreiben einer Heizeinrichtung, insbesondere für ein Kraffahrzeug, gemäß dem Oberbegriff des Anspruchs 1 sowie eine Heizeinrichtung gemäß dem Oberbegriff des Anspruchs 10.

Derartige Heizeinrichtungen, wie sie beispielsweise als Zuheizer oder Standheizungen in Kraftfahrzeugen zum Einsatz gelangen, weisen im Allgemeinen nahe dem Wasseraustrittsbereich einen Temperatursensor auf, welcher die Temperatur der Flüssigkeit, welche den Wärmetauscherbereich durchströmt hat, nahe dem Flüssigkeitsaustrittsbereich erfasst. Beruhend auf diesem Temperaturwert wird bei bekannten Heizeinrichtungen dann die Heizleistung der Wärmequelle, beispielsweise eines Brenners mit Flammrohr und dergleichen, eingestellt. Insbesondere können für die Temperatur verschiedene Schwellen vorgesehen sein, welche beim jeweiligen Überschreiten ein sukzessives Verringern der Heizleistung zur Folge haben. Es wird somit eine übermäßige Erwärmung der Flüssigkeit ausgeschlossen, beispielsweise dann, wenn die Flüssigkeit bereits mit vergleichsweise hoher Temperatur in den Wärmetauscherbereich eintritt. Derartige Heizeinrichtungen werden im Allgemeinen mit einem Flüssigkeitsdurchsatz von 300 l/h und mehr betrieben. Ein sehr hoher Flüssigkeitsdurchsatz hat zur Folge, dass die Erwärmung der Flüssigkeit beim Durchströmen des Wärmetauscherbereichs auf ein bestimmtes Maß begrenzt ist. Die Gefahr einer zu starken Erwärmung der Flüssigkeit mit entsprechend hoher Temperatur am Flüssigkeitsaustrittsbereich ist somit weitgehend ausgeschlossen.

Es besteht zunehmend die Anforderung oder das Bestreben, derartige Heizeinrichtungen auch mit deutlich kleineren Flüssigkeitsdurchsätzen von deutlich unter 300 l/h zu betreiben. Dies bedeutet, dass die Flüssigkeit den Wärmetauscherbereich mit deutlich geringerer Strömungsgeschwindigkeit durchströmt und somit auf Grund der längeren Verweilzeit im Wärmetauscherbereich auch mehr Wärmeenergie aufnehmen kann. Die Folge davon ist, dass selbst dann, wenn die Flüssigkeit mit vergleichsweise geringer Temperatur in den Wärmetauscherbereich eintritt, die Flüssigkeit dann, wenn sie den Wärmetauscherbereich am Flüssigkeitsaustrittsbereich wieder verlässt, eine derart hohe Temperatur aufweist, dass zumindest eine der vorangehend angesprochenen Schwellen überschritten wird. Die Folge davon ist, dass die Heizleistung der Wärmequelle beispielsweise durch Verringerung der Brennstoffzufuhr reduziert wird bzw. die Wärmequelle vollständig stillgesetzt wird. Da jedoch die Flüssigkeit im Allgemeinen mit deutlich geringerer Temperatur in den Wärmetauscherbereich eintritt, findet eine schnelle Abkühlung des nahe dem Austrittsbereich positionierten Temperatursensors statt. Die Folge davon ist, dass dieser die Wärmequelle wieder aktiviert bzw. deren Heizleistung wieder erhöht. Es besteht somit die Gefahr von durch ein ständiges Einschalten und Ausschalten der Wärmequelle induzierten übermäßigen Regelschwankungen. Außerdem besteht bei den oben angegebenen geringen Strömungsraten die Gefahr, dass durch zu starke Erwärmung der Flüssigkeit im Wärmetauscherbereich Dampfblasen erzeugt werden. Diese können zur Beschädigung oder zur Zerstörung des Wärmetauschers führen. Ferner können sich von der Wärmetauscheroberfläche ablösende Dampfblasen zu Druckstößen führen, welche nicht nur den Wärmetauscher sondern auch Schlauchverbindungen und andere von der Flüssigkeit beaufschlagte Komponenten in hohem Maße belasten.

Aus der gattungsbildenden DE 35 17 954 A1 ist ein Heizgerät bekannt, bei dem in einem Wärmetauscherbereich Wasser Wärme aufnimmt. Im Eintrittsbereich und im Austrittsbereich des Wärmetauscherbereichs wird die Temperatur des Wassers als erste bzw. als zweite Größe erfasst. Aus diesen beiden Größen wird eine Differenzgröße gebildet, und auf der Grundlage dieser Differenzgröße wird die Heizung zur Einstellung der Heizleistung derselben angesteuert. Hierzu wird die Differenzgröße mit einem zugeordneten Sollwert verglichen, und in Abhängigkeit davon, ob die Differenzgröße über oder unter dem Sollwert liegt, wird die Heizleistung beeinflusst. Auch bei Über- bzw. Unterschreiten jeweiliger Grenztemperaturen am Wassereintritt bzw. am Wasseraustritt wird durch Vergleich der erfassten Temperaturen bzw. Größen mit zugeordneten Sollwerten bzw. Schwellenwerten die Heizleistung verändert, nämlich in der Richtung, dass bei Überschreiten einer jeweiligen Solltemperatur in einen Teillastbetrieb übergegangen wird, während beim Unterschreiten in einen Volllastbetrieb übergegangen wird.

Es ist die Aufgabe der vorliegenden Erfindung, ein gattungsgemäßes Verfahren bzw. eine gattungsgemäße Vorrichtung so weiterzubilden, dass auch bei geringem Flüssigkeitsdurchsatz des Wärmetauscherbereichs ein korrekter Betrieb der Heizeinrichtung gewährleistet ist.

Gemäß einem ersten Aspekt wird diese Aufgabe gelöst durch ein Verfahren zum Betreiben einer Heizeinrichtung, insbesondere für ein Kraffahrzeug, gemäß Anspruch 1, welche Heizeinrichtung umfasst: eine Wärmequelle, einen Wärmetauscherbereich mit einem Flüssigkeitseintrittsbereich und einem Flüssigkeitsaustrittsbereich, wobei in dem Wärmetauscherbereich auf von dem Flüssigkeitseintrittsbereich zu dem Flüssigkeitsaustrittsbereich strömende Flüssigkeit von der Wärmequelle bereitgestellte Wärmeenergie übertragen werden kann, eine Sensoranordnung zur Erfassung einer ersten Größe, welche in Zusammenhang mit der Temperatur der Flüssigkeit an einem stromaufwärtigeren Bereich des Wärmetauscherbereichs steht, und einer zweiten Größe, welche in Zusammenhang mit der Temperatur der Flüssigkeit an einem stromabwärtigeren Bereich des Wärmetauscherbereichs steht, wobei das Verfahren das Beeinflussen der Heizleistung der Wärmequelle beruhend auf der ersten Größe und der zweiten Größe umfasst.

Die vorliegende Erfindung geht den Weg, nicht nur die Temperatur der den Wärmetauscherbereich verlassenden Flüssigkeit zu berücksichtigen; sondern auch zu berücksichtigen, wie die Temperatur der Flüssigkeit beim Durchströmen des Wärmetauscherebereichs sich geändert hat. Hierzu werden an zwei hinsichtlich der Strömungsrichtung unterschiedlichen Orten, also einem weiter stromaufwärts gelegenen Ort und einem weiter stromabwärts gelegenen Ort, jeweils Größen erfasst, die mit der Temperatur der Flüssigkeit in diesen Bereichen zusammenhängen. Da die den Wärmetauscherbereich durchströmende Flüssigkeit eine Temperaturerhöhung erfährt, kann durch das Bereitstellen der beiden angesprochenen Werte bzw. Größen darauf geschlossen werden, in welchem Ausmaß die Temperatur der Flüssigkeit sich geändert hat, und in Abhängigkeit davon kann dann die Heizleistung der Wärmequelle beeinflusst werden. Wesentliche Grundlage hierfür bildet die Erkenntnis, dass die beim Durchströmen des Wärmetauscherbereichs auftretende Temperaturänderung der Flüssigkeit stark korreliert ist mit der Strömungsrate. Wie bereits ausgeführt, hat ein schnelleres Durchströmen eine geringere Erwärmung zur Folge, während bei langsamem Durchströmen bei gleicher-Heizleistung der Wärmequelle die Flüssigkeit den Wärmetauscherbereich mit deutlich höherer Temperatur verlassen wird. Das Erkennen der Temperaturänderung, was durch das Bereitstellen zweier darauf hinweisender Größen ermöglicht wird, gestattet somit auch ein indirektes Erkennen, ob die Heizeinrichtung mit hohem Flüssigkeitsdurchsatz oder geringem Flüssigkeitsdurchsatz betrieben wird. In entsprechender Weise kann dann auch die Hezleistung der Wärmequelle eingestellt werden.

Bei dem erfindungsgemäßen Verfahren ist vorgesehen, dass beruhend auf der ersten Größe und der zweiten Größe eine den Unterschied zwischen der ersten Größe und der zweiten Größe wiedergebende Differenzgröße bestimmt wird und dass wenigstens beruhend auf der Differenzgröße die Heizleistung der Wärmequelle beeinflusst wird, dass für die zweite Größe wenigstens ein erster Schwellenwert vorgegeben wird, dass dann, wenn die zweite Größe den wenigstens einen ersten Schwellenwert erreicht, die Heizleistung der Wärmequelle verändert wird und dass der wenigstens eine erste Schwellenwert in Abhängigkeit von der Differenzgröße bestimmt wird. Diese Vorgehensweise bedeutet also, dass in Abhängigkeit von der Differenzgröße und somit in Abhängigkeit vom Flüssigkeitsdurchsatz der wenigstens eine erste Schwellenwert eingestellt werden kann, was letztendlich dann eine in Abhängigkeit von der Temperaturdifferenz bzw. in Abhängigkeit von der Strömungsrate vorzunehmende Einstellung der Heizleistung der Wärmequelle zur Folge hat.

Hier kann beispielsweise derart vorgegangen werden, dass für die Differenzgröße wenigstens ein zweiter Schwellenwert vorgegeben wird und dass dann, wenn die Differenzgröße den wenigstens einen zweiten Schwellenwert erreicht, der wenigstens eine erste Schwellenwert verändert wird. Alternativ oder zusätzlich ist es möglich, dass der wenigstens eine erste Schwellenwert in Abhängigkeit von der. Differenzgröße wenigstens bereichsweise - bezogen auf den Wertebereich der Differenzgröße - kontinuierlich verändert wird. Um eine übermäßige Erwärmung bei geringerer Strömungsrate vermeiden zu können, wird vorgeschlagen, dass mit zunehmendem Betrag der Differenzgröße die Heizleistung der Wärmequelle gesenkt wird. Hier kann beispielsweise derart vorgegangen werden, dass mit zunehmendem Betrag der Differenzgröße der wenigstens eine erste Schwellenwert verringert wird.

Bei dem erfindungsgemäßen Verfahren kann weiter vorgesehen sein, dass bei Überschreiten einer ersten Schwelle die Wärmequelle außer Betrieb gesetzt wird.

Um die Anpassung der Heizleistung an den tatsächlichen Durchsatz in mehr oder weniger kontinuierlicher Art und Weise vornehmen zu können, wird vorgeschlagen, dass wenigstens in einem Bereich des Wertebereichs der Differenzgröße ein erster erster Schwellenwert, dessen Überschreiten eine erste Verringerung der Heizleistung der Wärmequelle auslöst, auf einen kleineren Wert gesetzt ist, als ein zweiter erster Schwellenwert, dessen Überschreiten eine zweite Verringerung der Heizleistung der Wärmequelle auslöst. Da dann, wenn die Heizleistung bereits ein erstes Mal verringert worden ist, die Gefahr einer übermäßigen Erwärmung der den Wärmetauscherbereich durchströmenden Flüssigkeit bereits deutlich verringert ist, ist es zum Vermeiden unnötiger Regelschwingungen oder Regelvorgänge vorteilhaft, wie oben angegeben, den den zweiten Verringerungsschritt auslösenden Schwellenwert auf einen höheren Wert zu setzen, als denjenigen Schwellenwert, welcher den ersten Verringerungsschritt auslöst. Es sei darauf hingewiesen, dass selbstverständlich bei dieser Vorgehensweise mehr als zwei Schritte vorgesehen sein können, wobei die vorangehend angesprochene Größenzuordnung für zumindest zwei dieser Schritte gilt.

Die erste Größe kann im Wesentlichen die Temperatur der Flüssigkeit im Bereich des Eintrittsbereichs wiedergeben. In entsprechender Weise kann die zweite Größe im Wesentlichen die Temperatur der Flüssigkeit im Bereich des Austrittsbereichs wiedergeben. Es sei bereits hier darauf hingewiesen, dass dies nicht notwendigerweise bedeutet, dass die Temperatur auch tatsächlich in diesem Bereich nahe dem Eintrittsbereich bzw. nahe dem Austrittsbereich erfasst wird. Wie noch ausgeführt wird, ist es möglich, an anderen Bereichen als dem Eintrittsbereich und dem Austrittsbereich durch entsprechende Positionierung eines Temperatursensors Information darüber zu gewinnen, in welchem Bereich die Temperatur der Flüssigkeit am Eintrittsbereich bzw. am Austrittsbereich liegt.

Die eingangs genannte Aufgabe wird femer gelöst durch eine Heizeinrichtung, insbesondere für ein Kraftfahrzeug, gemäß Anspruch 10 gelöst. Diese Heizeinrichtung umfasst eine Wärmequelle, einen Wärmetauscherbereich mit einem Flüssigkeitseintrittsbereich und einem Flüssigkeitsaustrittsbereich, wobei in dem Wärmetauscherbereich auf von dem Flüssigkeitseintrittsbereich zu dem Flüssigkeitsaustrittsbereich strömende Flüssigkeit von der Wärmequelle bereitgestellte Wärmeenergie übertragen werden kann, eine Sensoranordnung zur Erfassung einer ersten Größe, welche in Zusammenhang mit der Temperatur der Flüssigkeit an einem stromaufwärtigeren Bereich des Wärmetauscherbereichs steht, und einer zweiten Größe, welche in Zusammenhang mit der Temperatur der Flüssigkeit an einem stromabwärtigeren Bereich des Wärmetauscherbereichs steht, eine Ansteuereinrichtung für die Wärmequelle, wobei die Ansteuereinrichtung dazu ausgebildet ist, die Heizleistung der Wärmequelle beruhend auf der ersten Größe und der zweiten Größe einzustellen. Wie bereits vorangehend ausgeführt, ist es vorteilhaft, wenn bei einer derartigen Heizeinrichtung weiter vorgesehen ist, dass die Ansteuereinrichtung ein Differenzglied aufweist zum Bilden einer den Unterschied zwischen der ersten Größe und der zweiten Größe wiedergebenden Differenzgröße und dass die Ansteuereinrichtung dazu ausgebildet ist, die Heizleistung der Wärmequelle wenigstens beruhend auf der Differenzgröße einzustellen.

Grundsätzlich sei ausgeführt, dass bei der.erfindungsgemäßen Heizeinrichtung die Ansteuereinrichtung derart ausgebildet sein kann, dass sie das vorangehend beschriebene erfindungsgemäße Verfahren zur Einstellung der Heizleistung der Wärmequelle durchführen kann.

Bei der erfindungsgemäßen Heizeinrichtung kann vorgesehen sein, dass die Sensoranordnung einen ersten Temperatursensor umfasst zur Erzeugung eines als die erste Größe im Wesentlichen die Temperatur der Flüssigkeit im Bereich des Eintrittsbereichs wiedergebenden ersten Sensorsignals und einen zweiten Temperatursensor umfasst zur Erzeugung eines als die zweite Größe im Wesentlichen die Temperatur der Flüssigkeit im Bereich des Austrittsbereichs wiedergebenden zweiten Sensorsignals.

Es ist beispielsweise möglich, dass der erste Temperatursensor zur Erfassung im Wesentlichen der Temperatur eines den Wärmetauscherbereich an der von der Wärmequelle abgewandten Seite begrenzenden Gehäuses im Bereich des Flüssigkeitseintrittsbereichs vorgesehen ist. Die Temperaturerfassung an einer Gehäusewandung, also nicht direkt in thermischem Kontakt mit der Flüssigkeit, gestattet ebenso einen Rückschluss auf die Flüssigkeitstemperatur und führt somit zu einem Temperaturwert, der für die erfindungsgemäße Vorgehensweise dann ausgewertet werden kann. Alternativ ist es selbstvertsändlich möglich, dass der erste Temperatursensor zur Erfassung der Temperatur der den Wärmetauscherbereich durchströmenden Flüssigkeit im Bereich des Flüssigkeitseintrittsbereichs vorgesehen ist.

Weiter kann vorgesehen sein, dass der zweite Temperatursensor zur Erfassung im Wesentlichen der Temperatur eines den Wärmetauscherbereich an der von der Wärmequelle abgewandten Seite begrenzenden Gehäuses im Bereich des Flüssigkeitsaustrittsbereichs vorgesehen ist. Alternativ ist es auch hier möglich, dass der zweite Temperatursensor zur Erfassung der Temperatur der den Wärmetauscherbereich durchströmenden Flüssigkeit im Bereich des Flüssigkeitsaustrittsbereichs vorgesehen ist. Weiter kann vorgesehen sein, dass der zweite Temperatursensor zur Erfassung im Wesentlichen der Temperatur eines den Wärmetauscherbereich an der der Wärmequelle zugewandten Seite begrenzenden Gehäuses vorgesehen ist. Hier wurde erkannt, dass durch Erfassung der Temperatur einer letztendlich auch die Wärmequelle umschließenden Wandung ein Wert bzw. ein Signal erhalten wird, das in klarem Zusammenhang mit der Temperatur steht, welche die Flüssigkeit haben wird, nachdem sie den Wärmetauscherbereich durchströmt hat.

Die vorliegende Erfindung wird nachfolgend mit Bezug auf die beiliegenden Zeichnungen deatilliert beschrieben. Es zeigen:
- Fig. 1 bis 3: schematische Schittansichten der erfindungsgemäßen Heizeinrichtung jeweils mit verschieden positionierten Temperatursensoren;
- Fig. 4: das Temperaturverhalten der den Wärmetauscherbereich der erfindungsgemäßen Heizeinrichtung durchströmenden Flüssigkeit in Abhängigkeit vom Volumenstrom;
- Fig. 5: ein Diagramm, das den Zusammenhang zwischen der Einstellung einer Regelschwelle und der Temperaturdifferenz darstellt;
- Fig. 6: ein der Fig. 5 entsprechendes Diagramm, das eine kontinuierliche Veränderung der Regelschwelle zeigt;
- Fig. 7: ein weiteres der Fig. 5 entsprechendes Diagramm, das den Zusammenhang zwischen der Temperaturdifferenz und einer weiteren Regelschwelle darstellt;
- Fig. 8: ein der Fig. 7 entsprechendes Diagramm, das eine kontinuierliche Veränderung der weiteren Regeischwelle veranschaulicht;
- Fig. 9: ein Diagramm, das qualitativ den Zusammenhang zwischen der Temperaturdifferenz und einer in Abhängigkeit von der Temperaturdifferenz einzustellenden Regelschwelle darstellt.

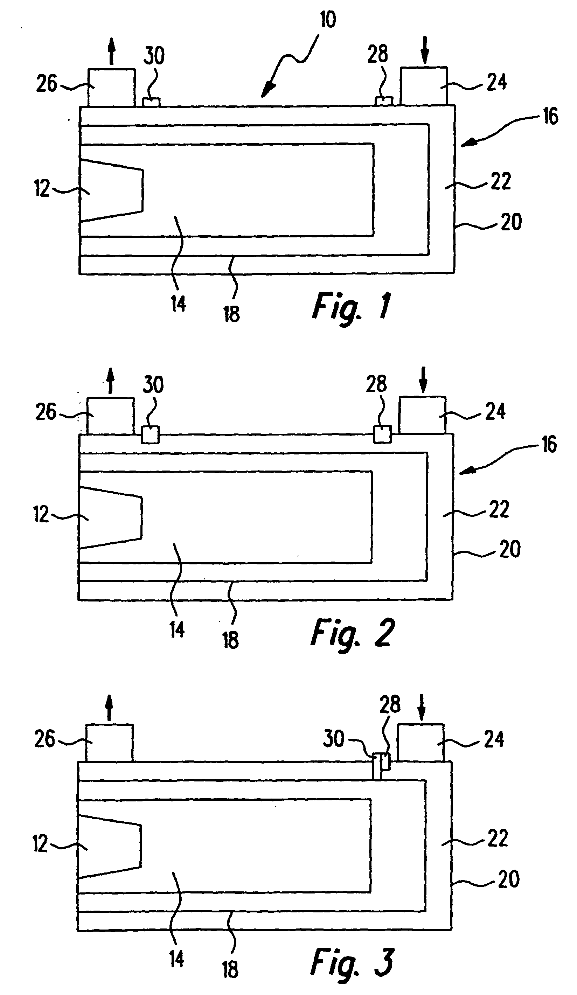

In Fig. 1 ist eine erfindungsgemäße Heizeinrichtung 10 schematisch dargestellt. Die Heizeinrichtung 10 umfasst einen allgemein mit 12 bezeichneten Heizbrenner herkömmlicher Bauart, dem beispielsweise ein Flammrohr 14, eine nicht dargestellte Brennstoffzufuhr, eine nicht dargestellte Verbrennungsluftzufuhr sowie ein Abgasführungssystem zugeordnet sind. Der Heizbrenner 12 ist zur Übertragung der darin erzeugten Wärmeenergie auf eine zu erwärmende Flüssigkeit von einem Wärmetauscherbereich 16 umgeben. Zum Heizbrenner 12 hin ist der Wärmetauscherbereich 16 durch ein erstes Gehäuse 18 begrenzt. Nach außen hin, also an der vom Heizbrenner 12 abgewandten Seite, ist der Wärmetauscherbereich 16 durch ein Gehäuse 20 begrenzt. Zwischen den beiden Gehäusen 18, 20 ist also ein Raumbereich 22 gebildet, in welchen über einen Flüssigkeitseintrittsbereich 24 zu erwärmende Flüssigkeit eintreten kann. Nachdem die Flüssigkeit den Raumbereich 22 durchströmt hat, kann sie den Wärmetauscherbereich 16 an einem Flüssigkeitsaustrittsbereich 26 wieder verlassen.

Die erfindungsgemäße Heizeinrichtung 10 weist ferner zwei Temperatursensoren 28, 30 auf. In dem in Fig. 1 dargestellten Beispiel sind die Temperatursensoren 28, 30 an der Außenseite des Gehäuses 20 angeordnet und erfassen somit im Wesentlichen die Temperatur dieses Gehäuses 20 im Bereich des Flüssigkeitseintrittsbereichs 24, sofern der Temperatursensor 28 betroffen ist, und im Bereich des Flüssigkeitaustrittsbereichs 26, sofern der Temperatursensor 30 betroffen ist. Die Temperatursensoren 28, 30 liefern Signale, welche jeweils der durch diese erfassten Temperatur entsprechen, an eine nicht dargestellte Ansteuereinrichtung, welche, wie im Folgenden noch detailliert beschrieben, beruhend auf diesen Signalen die Heizleistung des Heizbrenners 12 durch entsprechende Brennstoffzufuhr bzw. durch Unterbinden oder Verringern der Brennstoffzufuhr und ggf. entsprechend veränderte Zufuhr von Verbrennungsluft einstellt.

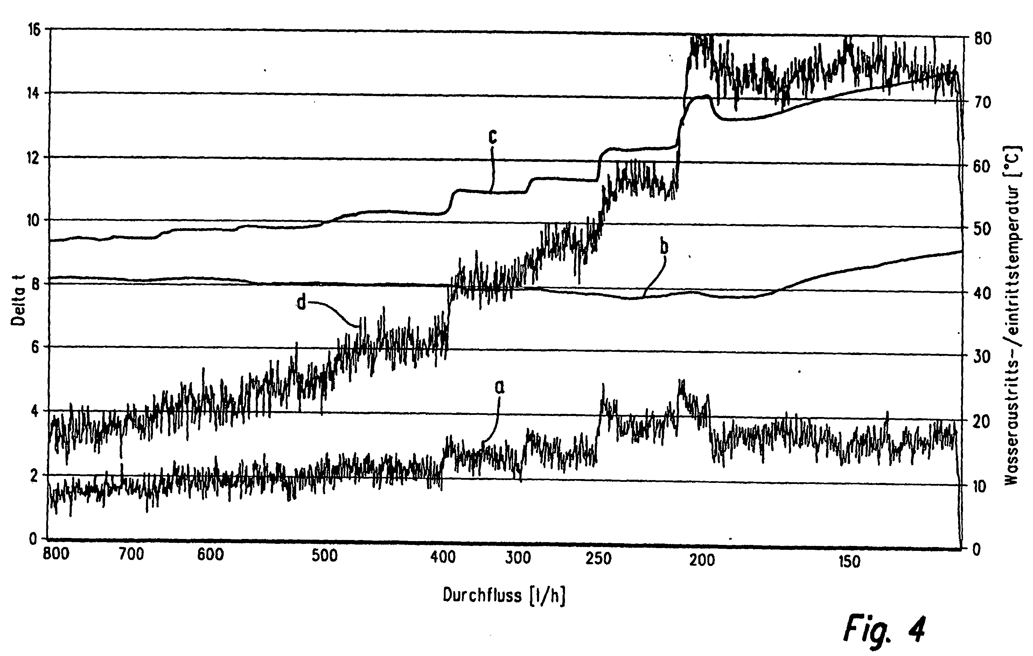

Mit Bezug auf die Figuren 2 und 3 sei ausgeführt, dass die in Fig. 1 erkennbare Art und Weise der Positionierung der Temperatursensoren 28, 30 beliebig ist. Von Bedeutung ist, dass irgendwo im Bereich zwischen dem Flüssigkeitseintrittsbereich 24 und dem Flüssigkeitsaustrittsbereich 26 durch diese Temperatursensoren 28, 30 zwei Signale bzw. Größen bereitgestellt werden, welche korreliert sind mit der Temperatur der Flüssigkeit an zwei verschiedenen zwischen dem Flüssigkeitseintrittsbereich 24 und dem Flüssigkeitsaustrittsbereich 26 gelegenen Bereichen des Raumbereichs 22. D.h., bezogen auf den Temperatursensor 30 ist der Temperatursensor 28 an einem weiter stromaufwärts gelegenen Bereich des Raumbereichs 22 positioniert, während, bezogen auf den Temperatursensor 28, der Temperatursensor 30 an einem weiter stromabwärts gelegenen Bereich des Raumbereichs 22 angeordnet ist. Je näher der Temperatursensor 28 an den Flüssigkeitseintrittsbereich 24 herangerückt wird bzw. je näher der Temperatursensor 30 an den Flüssigkeitsaustrittsbereich 26 herangerückt wird, desto mehr wird die durch diese beiden Sensoren 28, 30 bereitgestellte Information tatsächlich der Temperatur am Flüssigkeitseintrittsbereich 24 bzw. am Flüssigkeitaustrittsbereich 26 entsprechen. Für die Prinzipien der vorliegenden Erfindung ist es jedoch lediglich von Bedetung, zu erkennen, wie bzw. in welchem Ausmaß beim Durchströmen des Raumbereichs 22 die Flüssigkeit ihre Temperatur verändert. Dies kann auch durch Temperaturerfassung an vergleichsweise nahe beieinander liegenden Bereichen des Raumbereichs 22 erfolgen, wobei dann selbstverständlich zu berücksichtigen ist, dass bei nur geringerer Beabstandung der beiden Temperatursensoren 28, 30 bereits eine vergleichsweise kleine Temperaturdifferenz auf eine starke Erwärmung der Flüssigkeit beim Strömen vom Flüssigkeitseintrittsbereich 24 zum Flüssigkeitsaustrittsbereich 26 hinweisen kann.

Des Weiteren sei darauf hingewiesen, dass die in Fig. 1 dargestellte Positionierung der Temperatursensoren 28, 30 an der Außenseite des Gehäuses 20 ebenso einen direkten Rückschluss auf die Temperatur der Flüssigkeit in den entsprechenden Bereichen zulässt, wie die in Fig. 2 dargestellte Positionierung, bei welcher die Temperatursensoren 28, 30 unmittelbar in den Raumbereich 22 eintauchen und somit unmittelbar die Temperatur der den Raumbereich 22 durchströmenden Flüssigkeit erfassen können. Es wird hierzu auf die Kurve a in Fig. 4 hingewiesen. Diese Kurve zeigt die Temperaturdifferenz zwischen der Temperatur, wie sie beispielsweise bei der in Fig. 2 dargestellten Positionierung des Temperatursensors 30 im oder nahe dem Flüssigkeitsaustrittsbereich 26 erfasst wird, und der Temperatur, wie sie bei der in Fig. 1 dargestellten Positionierung des Temperatursensors 30 nahe dem Flüssigkeitsaustrittsbereich 26, jedoch an der Außenseite des Gehäuses 20, erfasst wird. Man erkennt, dass in dem angegebenen Durchflussbereich diese Differenz, wiedergegeben durch die Kurve a, näherungsweise konstant ist. Ggf. kann bei entsprechender Positionierung die Kurve a auch als Eichkurve zum Einsatz kommen.

Bei der in Fig. 3 dargestellten Positionierung sind beide Temperatursensoren 28, 30 beispielsweise zu einer Baueinheit zusammengefasst und bilden einen kombinierten Temperatursensor, der zum einen die Temperatur der im Raumbereich 22 strömenden Flüssigkeit nahe dem Flüssigkeitseintrittsbereich 24 erfasst, nämlich durch den Sensoranteil 28. Der Sensoranteil 30 erfasst im gleichen lokalen Bereich durch direkte Kontaktierung die Temperatur des Gehäuses 18. Dieses Gehäuse 18 wird durch den Heizbrenner 12 erwärmt und überträgt die Wärme auf die im Raumbereich 22 strömende Flüssigkeit. D.h., dass die Flüssigkeit, nachdem sie sich durch den Raumbereich 22 bewegt hat, idealerweise die Temperatur aufweist, welche auch das Gehäuse 18 hat. Die Temperatur des Gehäuses 18 entspricht somit näherungsweise auch der Temperatur der Flüssigkeit, welche den Flüssigkeitsaustrittsbereich 26 verlässt.

Es wird somit anhand der vorangehenden Beschreibung der Figuren 1 bis 3 erkennbar, dass für die im Folgenden dargelegten wesentlichen Prinzipien der vorliegenden Erfindung die Bereitstellung zweier Größen von Bedeutung ist, die mit der Temperatur der Flüssigkeit, welche den Raumbereich 22 durchströmt, an verschiedenen Raumbereichen korrespondiert. Je größer der räumliche Abstand der beiden Temperatursensoren ist, desto größer wird selbstverständlich auch die erfasste Temperaturdifferenz sein und desto präziser kann möglicherweise die Auswertung vorgenommen werden. Prinzipiell genügt jedoch auch eine vergleichsweise kleine Temperaturdifferenz, um auf die Erwärmung der Flüssigkeit, welche den Raumbereich 22 durchströmt, schließen zu können.

Die Fig. 4 zeigt ein Diagramm, das in Abhängigkeit von dem Durchfluss, d.h. der pro Zeiteinheit durch den Raumbereich 22 strömenden Flüssigkeitsmenge, in den Kurven b und c zum einen die Flüssigkeitstemperatur im Bereich des Eintrittsbereichs 24 (Kurve b) und zum anderen die Temperatur der Flüssigkeit im Bereich des Austrittsbereichs 26 (Kurve c) darstellt. Man erkennt, dass mit abnehmendem Durchfluss die Austrittstemperatur zunimmt, was auch durch den Anstieg der Kurve d erkennbar ist, welche qualitativ die Differenz dT zwischen der Temperatur am Austrittsbereich und der Temperatur am Eintrittsbereich darstellt. Dies bedeutet, dass selbst dann, wenn das Wasser mit vergleichsweise niedriger Temperatur im Bereich von etwa 45°C in den Raumbereich 22 eintritt, bei mit Vollast arbeitendem Heizbrenner 12 das Wasser sehr stark erwärmt wird, was im Wesentlichen auf die geringe Strömungsgeschwindigkeit und somit lange Verweilzeit im Raumbereich 22 zurückzuführen ist. Da jedoch darauf geachtet werden muss, dass die Erwärmung im Raumbereich 22 in bestimmten Grenzen gehalten wird und auch die Flüssigkeit den Austrittsbereich 26 nur mit einer bestimmten Maximaltemperatur verlässt, wird im Folgenden eine erfindungsgemäße Vorgehensweise beschrieben, mit welcher dafür gesorgt werden kann, dass auch bei sehr geringem Durchfluss, beispielsweise im Bereich von 100 l/h - 50 l/h, eine Überhitzung nicht auftreten kann.

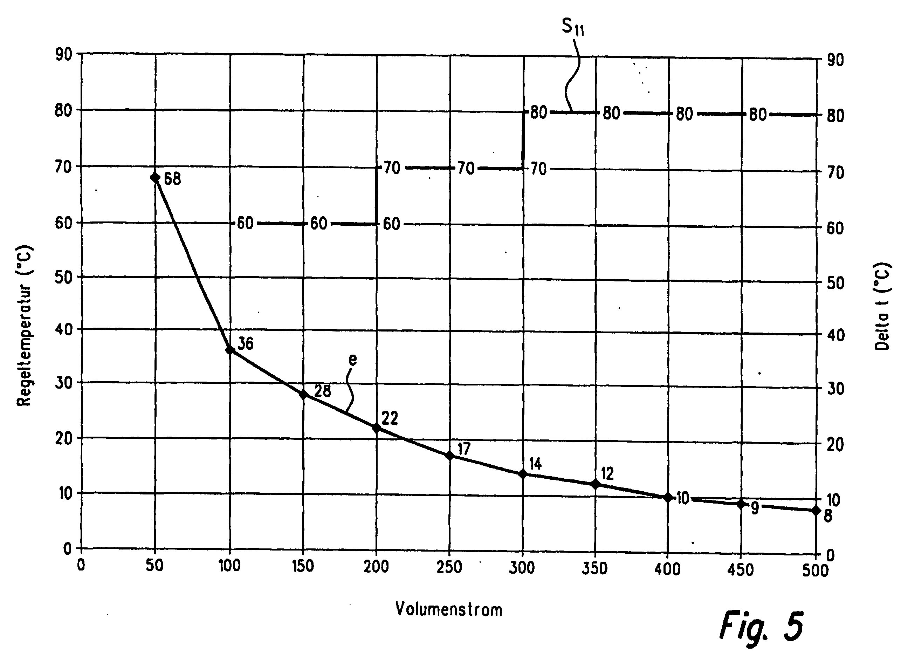

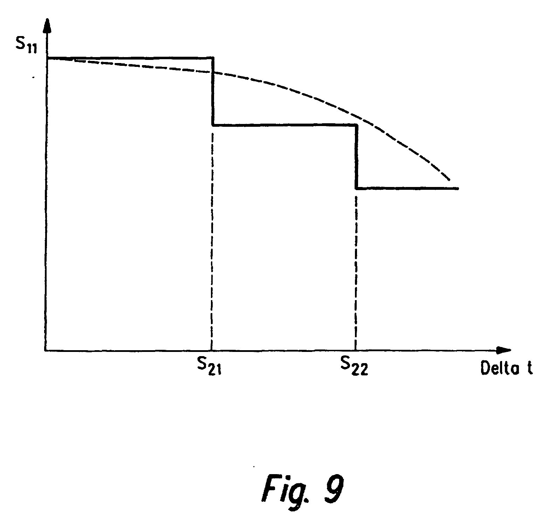

Grundsätzlich ist es bei derartigen Heizeinrichtungen bekannt, beruhend auf der Temperatur im Austrittsbereich 26, welche beispielsweise erfasst wird durch den Sensor 30, einen Regelvorgang derart durchzuführen, dass dann, wenn die Temperatur über einen bestimmten Schwellenwert ansteigt, die Heizleistung des Heizbrenners 12 reduziert wird. Wird bei dann reduzierter Heizleistung eine weitere Temperaturschwelle für die Flüssigkeit am Austrittsbereich 26 überschritten, wird der Heizbrenner 28 abgeschaltet, so dass vorübergehend überhaupt keine Erwärmung stattfindet. Gemäß der vorliegenden Erfindung ist nun vorgesehen, dass zur Durchführung dieses Vorgangs der Einstellung der Heizleistung des Heizbrenners 12 nicht nur die Temperatur der den Raumbereich 22 verlassenden Flüssigkeit herangezogen wird, sondern zusätzlich auch noch die Temperatur der in den Raumbereich 22 eintretenden Flüssigkeit berücksichtigt wird. Es wird gemäß der vorliegenden Erfindung nämlich ein Differenzwert gebildet, welcher letztendlich einer Differenztemperatur zwischen den beiden vermittels der Sensoren 28, 30 erfassten Werten entspricht. Diese Differenztemperatur ist in Fig. 5 durch die Kurve e repräsentiert. Man erkennt auch in Fig. 5, dass mit abnehmendem Volumenstrom ein deutlicher Anstieg dieser Differenztemperatur Delta t auftritt. In Zuordnung zu der mit abnehmendem Volumenstrom ansteigenden Differenztemperatur, wiedergegeben durch die Kurve e, wird nunmehr ein Schwellenwert S₁₁, dessen Überschreiten eine Verringerung der Heizleistung des Heizbrenners 12 auslöst, verändert. Man erkennt anhand des in Fig. 5 dargestellten Beispiels, dass beispielsweise bei Erreichen einer Differenztemperatur von 14°C dieser Schwellenwert S₁₁ von 80°C auf 70°C reduziert wird. Wird eine Differenztemperatur von 22°C erreicht, wird der Schwellenwert S₁₁ um weitere 10° auf 60°C reduziert. Dies bedeutet letztendlich, dass in Anpassung an die ansteigende Differenztemperatur die Schwelle, welche eine erste Verringerung der Heizleistung auslöst, nämlich der Schwellenwert S₁₁, reduziert wird. Infolgedessen kann bei zu starkem Anstieg der Differenztemperatur dafür gesorgt werden, dass bereits eine geringere Temperatur der Flüssigkeit, welche den Raumbereich 22 verlässt, zur Absenkung der Heizleistung führt, so dass weiterhin die Gefahr des Überhitzens vermieden wird. Dieser direkte Zusammenhang zwischen der Differenztemperatur und dem Schwellenwert S₁₁ ist in Fig. 9 noch einmal verdeutlicht. Man erkennt, dass auch hier-für die Differenztemperatur Delta t zwei Schwellenwerte S₂₁ und S₂₂ gesetzt sind, die beispielsweise einer Differenztemperatur von 14°C bzw 22°C enstprechen können. Erreicht die Temperaturdifferenz Delta t den Schwellenwert S₂₁, so wird mit einer ersten Stufe der Schwellenwert S₁₁ verringert. Steigt die Temperaturdifferenz an und erreicht sie den Schwellenwert S₂₂, so wird in einer zweiten Stufe der Schwellenwert S₁₁ noch einmal reduziert. Da, wie man vor allem der Fig. 5 entnehmen kann, diese Differenztemperatur Delta t, dort repräsentiert durch die Kurve e, in eindeutigem Zusammenhang mit dem Volumenstrom steht, wird also auch der Schwellenwert S₁₁ in Anpassung an den sich möglicherweise ändernden oder vorgegebenen Votumenstrom verändern. Da jedoch der Schwellenwert S₁₁ das Auslösekriterium für das Reduzieren der Heizleistung des Heizbrenners 12 ist, wird schließlich auch die Heizleistung des Heizbrenners in Abhängigkeit vom Volumenstrom eingestellt werden.

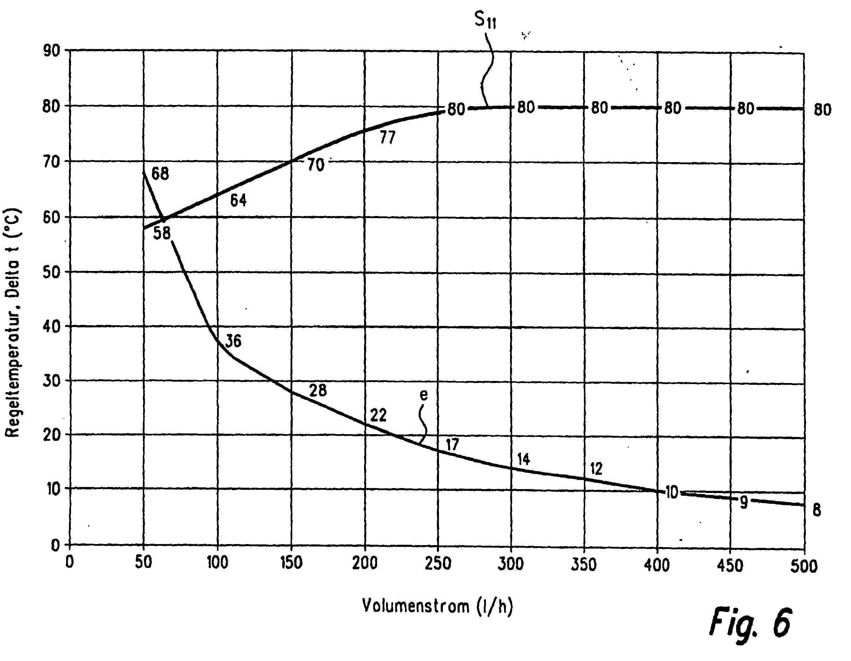

Es sei hier darauf hingewiesen, dass diese Anpassung des Schwellenwertes S₁₁ nicht notwendigerweise so wie in den Figuren 5 und 9 dargestellt in stufenartiger Form erfolgen muss. Vielmehr zeigt die Fig. 6, dass der Schwellenwert S₁₁ auch kontinuierlich als Funktion der Temperaturdifferenz Delta t, in Fig. 6 auch durch die Kurve e wiedergegeben, eingestellt werden kann. Dies ist in Fig. 9 anhand der in Strichlinie eingezeichneten Kurve erkennbar. Selbstverständlich ist es auch möglich, eine stufenartige Veränderung mit einer zwischen einzelnen Stufen sich kontinuierlichen darstellenden Änderung zu kombinieren.

Durch das Überschreiten der Schwelle S₁₁ wird also ein Auslösekriterium für eine erste Verringerung der Heizleistung des Heizbrenners 10 beispielsweise von Vollast auf Teillast in einem mittleren Lastbereich geschaffen. In einer Ansteuereinrichtung, welche den Heizbrenner 12 ansteuert, werden dann also entsprechende Ansteuerbefehle beispielsweise zum Ansteuern eines Brennstoffzuführventils oder dergleichen erzeugt.

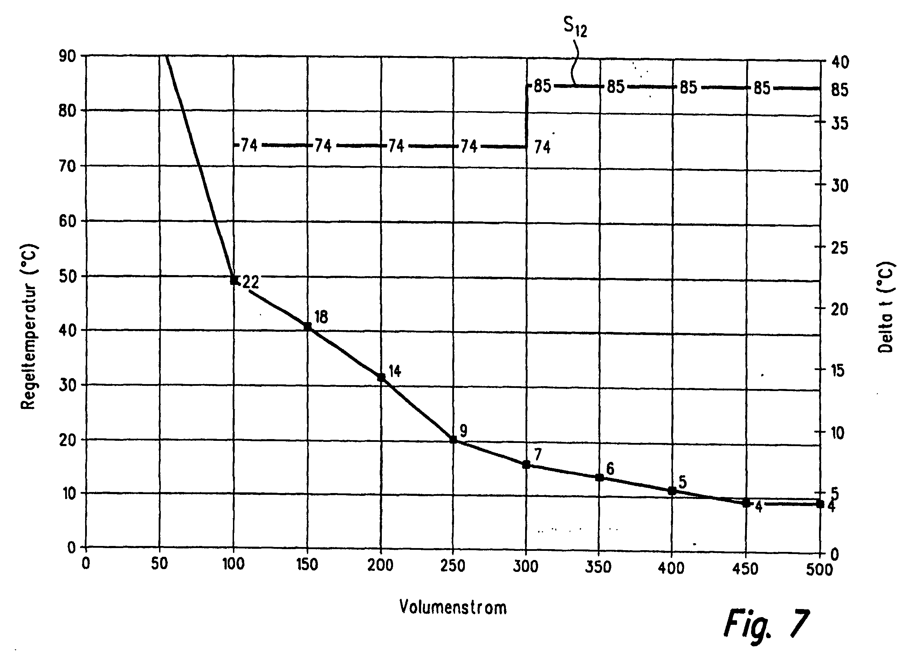

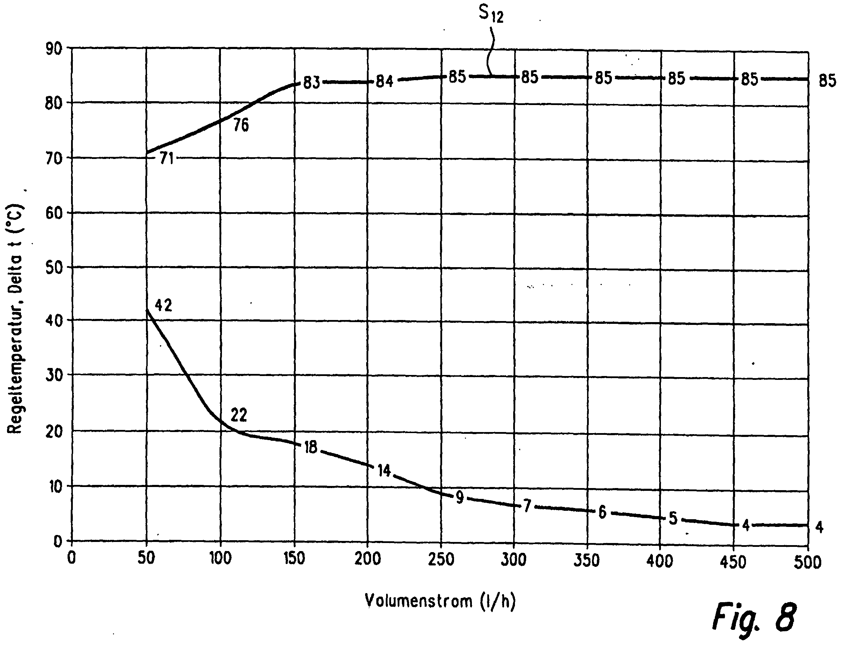

Bei sehr geringem Volumenstrom kann jedoch auch bei verringerter Heizleistung die den Raumbereich 22 durchströmende Flüssigkeit derart stark erwärmt werden, dass sie am Flüssigkeitsaustrittsbereich 26 bzw. auch bereits im Raumbereich 22 auf eine zu hohe Temperatur gebracht wird. Um dem vorzubeugen, kann gemäß einem weiteren Aspekt der vorliegenden Erfindung weiter vorgesehen sein, dass auch für den Betrieb mit bereits verringerter Heizleistung ein Temperaturschwellenwert S₁₂ für die Temperatur des den Raumbereich 22 verlassenden Wassers vorgesehen ist. Dieser Schwellenwert S₁₂ ist in Fig. 7 dargestellt. Auch hier erkennt man, dass in Abhängigkeit von der Temperaturdifferenz Delta t der Wert des Schwellenwertes S₁₂ sich ändert. Erreicht nämlich die Temperaturdifferenz Delta t einen Wert von beispielsweise 7°C, so wird der Schwellenwert S₁₂ im dargestellten Beispiel von 85 °C auf 74°C verringert. Auch das Überschreiten des Schwellenwertes S₁₂ löst dann eine weitere Verringerung der Heizleistung des Heizbrenners 12 durch entsprechende Ansteuerung aus, wobei hier beispielsweise auch eine Verringerung auf einen Wert von Null vorgesehen sein kann. Dies bedeutet, wird der Schwellenwert S₁₂ bei ohnehin bereits reduzierter Heizleistung überschritten, wird der Heizbrenner 12 abgeschaltet. Auch dieses Vorgeben des Schwellenwertes S₁₂ und somit dieses Beeinflussen der Heizleistung geschieht in Abhängigkeit von der Differenztemperatur Delta t und somit, wie der Fig. 7 auch entnehmbar, in Abhängigkeit vom Volumenstrom. Wie man der Fig. 8 entnehmen kann, ist selbstverständlich auch für diese zweite Stufe der Verringerung der Heizleistung eine in Anpassung an die Differenztemperatur Delta t kontinuierliche Veränderung des Schwellenwertes S₁₂ möglich.

Durch die vorangehend beschriebene Vorgehensweise wird also beispielsweise eine zweistufige Veränderung der Heizleistung bereitgehalten, wobei eine derartige Stufe der Heizleistungsverringerung immer dann auftritt, wenn ein zugeordneter Temperaturschwellenwert, nämlich S₁₁ oder S₁₂, überschritten wird. Diese Temperaturschwellenwerte werden in Abhängigkeit von der vermittels der Sensoren 28, 30 ermittelbaren Differenztemperatur, also in Abhängigkeit von der Erwärmung der den Raumbereich 22 durchströmenden Flüssigkeit, verändert. Insofern wird also, wie bereits ausgeführt, auch die Heizleistung in Abhängigkeit von der tatsächlichen Erwärmung und nicht nur in Abhängigkeit von der Absoluttemperatur am Auslassbereich beeinflusst. Da, wie ebenfalls bereits ausgeführt, die Differenztemperatur mit dem Volumenstrom in eindeutigem Zusammenhang steht, wird also das Betriebsverhalten des Heizbrenners an den Volumenstrom angepasst, so dass vor allem bei kleineren Volumenströmen frühzeitig einer übermäßigen Erwärmung der Flüssigkeit entgegenwirkende Maßnahmen ergriffen werden können. Es sei darauf hingewiesen, dass selbstverständlich auch beim Erhöhen der Heizleistung, beispielsweise nachdem die beiden Schwellenwerte S₁₁ und S₁₂ bereits einmal überschritten waren, entsprechend vorgegangen werden kann, wobei hier beispielsweise die gleichen Schwellenwerte S₁₁ und S₁₂ mit dem gleichen Zusammenhang mit der Differenztemperatur Delta t herangezogen werden können. Selbstverständlich ist es zum Vermeiden von Regelschwankungen auch möglich, für das Erhöhen der Heizleistung andere Kriterien bzw. andere Schwellenwerte vorzugeben, um einen Hystereseeffekt zu erlangen. Des Weiteren ist es selbstverständlich möglich, die Heizleistung in mehr als den vorangehend beschriebenen zwei Schritten zu verringern. Dies kann in einfacher Weise dadurch erlangt werden, dass mehrere derartige Schwellenwerte S₁ᵢ in Zuordnung zu jeweiligen Heizleistungsverringerungsschritten bereitgehalten werden.

Wie bereits vorangehend ausgeführt, ist es für die Prinzipien der vorliegenden Erfindung unbedeutend, an welchen Orten im Raumbereich 22 bzw. in Zuordnung zum Raumbereich 22 konkret die Temperatur vermittels der Sensoren 28, 30 erfasst werden. Auch eine nur geringe Beabstandung dieser beiden Sensoren wird zu einer Temperaturdifferenz führen, die größer sein wird, wenn der Volumenstrom abnimmt.

Die Prinzipien der vorliegenden Erfindung, nämlich die Beeinflussung der Heizleistung in Abhängigkeit von der sich einstellenden Temperaturdifferenz und somit auch in Abhängigkeit von dem vorgesehenen Volumenstrom können auch derart ausgeführt sein, dass ohne Zwischenschaltung des Schrittes der Vorgabe und Beobachtung jeweiliger Schwellenwerte für die Temperatur der den Raumbereich 22 verlassenden Flüssigkeit nach Erfassung der entsprechenden Temperaturwerte durch die Sensoren 28, 30 und nach Bilden des Differenztemperaturwertes der Delta t in Zuordnung zu einer derartigen Differenztemperaturlinie eine bestimmte Heizleistung für den Heizbrenner vorgegeben wird. Bei Betrachtung der Fig. 9 könnte also beispielsweise die dargestellte stufenartige Kennlinie an Stelle des Temperaturschwellenwertes S₁₁ auch unmittelbar einen die Heizleistung charakterisierenden Wert angeben, beispielsweise eine Ansteuerstellung eines Brennstoffeinspritzventils. D.h., mit zunehmender Temperaturdifferenz Delta t nimmt die Heizleistung, beispielsweise die eingespritzte Brennstoffmenge, ab, so dass der auf Grund der erhöhten Differenztemperatur erkennbaren starken Erwärmung bei geringem Volumenstrom unmittelbar durch Reduzierung der Heizleistung entgegengewirkt werden kann.

## Patentansprüche

1. Verfahren zum Betreiben einer Heizeinrichtung, insbesondere für ein Kraffahrzeug, welche Heizeinrichtung umfasst:
- eine Wärmequelle (12),
- einen Wärmetauscherbereich (16) mit einem Flüssigkeitseintrittsbereich (24) und einem Flüssigkeitsaustrittsbereich (26), wobei in dem Wärmetauscherbereich (16) auf von dem Flüssigkeitseintrittsbereich (24) zu dem Flüssigkeitsaustrittsbereich (26) strömende Flüssigkeit von der Wärmequelle (12) bereitgestellte Wärmeenergie übertragen werden kann,
- eine Sensoranordnung (28, 30) zur Erfassung einer ersten Größe, welche in Zusammenhang mit der Temperatur der Flüssigkeit an einem stromaufwärtigeren Bereich des Wärmetauscherbereichs (16) steht, und einer zweiten Größe, welche in Zusammenhang mit der Temperatur der Flüssigkeit an einem stromabwärtigeren Bereich des Wärmetauscherbereichs (16) steht,
wobei beruhend auf der ersten Größe und der zweiten Größe eine den Unterschied zwischen der ersten Größe und der zweiten Größe wiedergebende Differenzgröße (Delta t) bestimmt wird und wenigstens beruhend auf der Differenzgröße (Delta t) und der zweiten Größe die Heizleistung der Wärmequelle (12) beeinflusst wird, wobei dann, wenn die zweite Größe wenigstens einen ersten Schwellenwert (S₁₁, S₁₂) erreicht, die Heizleistung der Wärmequelle (12) verändert wird,
**dadurch gekennzeichnet, dass** der wenigstens eine erste Schwellenwert (S₁₁, S₁₂) in Abhängigkeit von der Differenzgröße (Delta t) bestimmt wird.

2. Verfahren nach Anspruch 1,
**dadurch gekennzeichnet, dass** für die Differenzgröße (Delta t) wenigstens ein zweiter Schwellenwert (S₂₁, S₂₂) vorgegeben wird und dass dann, wenn die Differenzgröße (Delta t) den wenigstens einen zweiten Schweilenwert (S₂₁, S₂₂) erreicht, der wenigstens eine erste Schwellenwert (S₁₁, S₁₂) verändert wird.

3. Verfahren nach Anspruch 1 oder 2,
**dadurch gekennzeichnet, dass** der wenigstens eine erste Schwellenwert (S₁₁, S₁₂) in Abhängigkeit von der Differenzgröße (Delta t) wenigstens bereichsweise - bezogen auf den Wertebereich der Differenzgröße (Delta t) - kontinuierlich verändert wird.

4. Verfahren nach einem der Ansprüche 1 bis 3,
**dadurch gekennzeichnet, dass** mit zunehmendem Betrag der Differenzgröße (Delta t) die Heizleistung der Wärmequelle (12) gesenkt wird.

5. Verfahren nach Anspruch 4,
**dadurch gekennzeichnet, dass** mit zunehmendem Betrag der Differenzgröße (Delta t) der wenigstens eine erste Schwellenwert (S₁₁, S₁₂) verringert wird.

6. Verfahren nach einem der Ansprüche 1 bis 5,
**dadurch gekennzeichnet, dass** bei Überschreiten einer ersten Schwelle (S₁₂) die Wärmequelle (12) außer Betrieb gesetzt wird.

7. Verfahren nach einem der Ansprüche 1 bis 6,
**dadurch gekennzeichnet, dass** wenigstens in einem Bereich des Wertebereichs der Differenzgröße (Delta t) ein erster erster Schwellenwert (S₁₁), dessen Überschreiten eine erste Verringerung der Heizleistung der Wärmequelle (12) auslöst, auf einen kleineren Wert gesetzt ist, als ein zweiter erster Schwellenwert (S₁₂), dessen Überschreiten eine zweite Verringerung der Heizleistung der Wärmequelle (12) auslöst.

8. Verfahren nach einem der Ansprüche 1 bis 7,
**dadurch gekennzeichnet, dass** die erste Größe im Wesentlichen die Temperatur der Flüssigkeit im Bereich des Eintrittsbereichs (24) wiedergibt.

9. Verfahren nach einem der Ansprüche 1 bis 8,
**dadurch gekennzeichnet, dass** die zweite Größe im Wesentlichen die Temperatur der Flüssigkeit im Bereich des Austrittsbereichs (26) wiedergibt.

10. Heizeinrichtung, insbesondere für ein Kraftfahrzeug, umfassend:
- eine Wärmequelle (12),
- einen Wärmetauscherbereich (16) mit einem Flüssigkeitseintrittsbereich (24) und einem Flüssigkeitsaustrittsbereich (26), wobei in dem Wärmetauscherbereich (16) auf von dem Flüssigkeitseintrittsbereich (24) zu dem Flüssigkeitsaustrittsbereich (26) strömende Flüssigkeit von der Wärmequelle (12) bereitgestellte Wärmeenergie übertragen werden kann,
- eine Sensoranordnung (28, 30) zur Erfassung einer ersten Größe, welche in Zusammenhang mit der Temperatur der Flüssigkeit an einem stromaufwärtigeren Bereich des Wärmetauscherbereichs (16) steht, und einer zweiten Größe, welche in Zusammenhang mit der Temperatur der Flüssigkeit an einem stromabwärtigeren Bereich des Wärmetauscherbereichs (16) steht,
- eine Ansteuereinrichtung für die Wärmequelle (12), wobei die Ansteuereinrichtung ein Differenzglied aufweist zum Bilden einer den Unterschied zwischen der ersten Größe und der zweiten Größe wiedergebenden Differenzgröße (Delta t) und die Ansteuereinrichtung dazu ausgebildet ist, die Heizleistung der Wärmequelle wenigstens beruhend auf der Differenzgröße und der zweiten Größe einzustellen, und dazu ausgebildet ist, wenigstens einen ersten Schwellenwert (S₁₁, S₁₂) für die zweite Größe vorzugeben und die Heizleistung zu verändern, wenn die zweite Größe den wenigstens einen ersten Schwellenwert (S₁₁, S₁₂) erreicht,
**dadurch gekennzeichnet,**
**dass** die Ansteuereinrichtung den wenigstens einen ersten Schwellenwert (S₁₁, S₁₂) für die zweite Größe in Abhängigkeit von der Differenzgröße (Delta t) bestimmt.

11. Heizeinrichtung nach Anspruch 10,
**dadurch gekennzeichnet, dass** die Ansteuereinrichtung zur Durchführung eines Verfahrens nach einem der Ansprüche 1 bis 9 ausgebildet ist.

12. Heizeinrichtung nach Anspruch 10 oder 11,
**dadurch gekennzeichnet, dass** die Sensoranordnung (28, 30) einen ersten Temperatursensor (28) umfasst zur Erzeugung eines als die erste Größe im Wesentlichen die Temperatur der Flüssigkeit im Bereich des Flüssigkeitseintrittsbereichs (24) wiedergebenden ersten Sensorsignals und einen zweiten Temperatursensor (30) umfasst zur Erzeugung eines als die zweite Größe im Wesentlichen die Temperatur der Flüssigkeit im Bereich des Flüssigkeitsaustrittsbereichs (26) wiedergebenden zweiten Sensorsignals.

13. Heizeinrichtung nach Anspruch 12,
**dadurch gekennzeichnet, dass** der erste Temperatursensor (28) zur Erfassung im Wesentlichen der Temperatur eines den Wärmetauscherbereich (16) an der von der Wärmequelle (12) abgewandten Seite begrenzenden Gehäuses (20) im Bereich des Flüssigkeitseintrittsbereichs (24) vorgesehen ist.

14. Heizeinrichtung nach Anspruch 12,
**dadurch gekennzeichnet; dass** der erste Temperatursensor (28) zur Erfassung der Temperatur der den Wärmetauscherbereich (16) durchströmenden Flüssigkeit im Bereich des Flüssigkeitseintrittsbereichs (24) vorgesehen ist.

15. Heizeinrichtung nach einem der Ansprüche 12 bis 14,
**dadurch gekennzeichnet, dass** der zweite Temperatursensor (30) zur Erfassung im Wesentlichen der Temperatur eines den Wärmetauscherbereich (16) an der von der Wärmequelle (12) abgewandten Seite begrenzenden Gehäuses (20) im Bereich des Flüssigkeitsaustrittsbereichs (26) vorgesehen ist.

16. Heizeinrichtung nach einem der Ansprüche 12 bis 14,
**dadurch gekennzeichnet, dass** der zweite Temperatursensor (30) zur Erfassung der Temperatur der den Wärmetauscherbereich (16) durchströmenden Flüssigkeit im Bereich des Flüssigkeitsaustrittsbereichs (26) vorgesehen ist.

17. Heizeinrichtung nach einem der Ansprüche 12 bis 14,
**dadurch gekennzeichnet, dass** der zweite Temperatursensor (30) zur Erfassung im Wesentlichen der Temperatur eines den Wärmetauscherbereich (16) an der der Wärmequelle (12) zugewandten Seite begrenzenden Gehäuses (18) vorgesehen ist.

## Claims

1. Method of operating a heating device, in particular for a motor vehicle, which heating device comprises:
- a heat source (12),
- a heat exchange zone (16) with a liquid inlet region (24) and a liquid outlet region (26) , wherein in the heat exchange zone (16) thermal energy provided by the heat source (12) may be transferred to liquid flowing from the liquid inlet region (24) to the liquid outlet region (26),
- a sensor arrangement (28, 30) for detecting a first variable, which is related to the temperature of the liquid at a more upstream region of the heat exchange zone (16) , and a second variable, which is related to the temperature of the liquid at a more downstream region of the heat exchange zone (16),
wherein on the basis of the first variable and the second variable a differential quantity (delta t) representing the difference between the first variable and the second variable is determined and at least on the basis of the differential quantity (delta t) and the second variable the heat output of the heat source (12) is influenced, wherein when the second variable reaches at least one first threshold value (S₁₁, S₁₂), the heat output of the heat source (12) is varied, **characterised in that** the at least one first threshold value (S₁₁, S₁₂) is determined as a function of the differential quantity (delta t).

2. Method according to claim 1, **characterised in that** for the differential quantity (delta t) at least one second threshold value (S₂₁, S₂₂) is defined and that when the differential quantity (delta t) reaches the at least one second threshold value (S₂₁, S₂₂), the at least one first threshold value (S₁₁, S₁₂) is varied.

3. Method according to claim 1 or 2, **characterised in that** the at least one first threshold value (S₁₁, S₁₂) is varied continuously at least in sections - in relation to the range of values of the differential quantity (delta t) - as a function of the differential quantity (delta t).

4. Method according to any of claims 1 to 3, **characterised in that** with an increasing amount of the differential quantity (delta t) the heat output of the heat source (12) is reduced.

5. Method according to claim 4, **characterised in that** with an increasing amount of the differential quantity (delta t) the at least one first threshold value (S₁₁, S₁₂) is reduced.

6. Method according to any of claims 1 to 5, **characterised in that** on overshooting of a first threshold (S₁₂) the heat source (12) is deactivated.

7. Method according to any of claims 1 to 6, **characterised in that** at least in a region of the range of values of the differential quantity (delta t) a first first threshold value (S₁₁), the overshooting of which triggers a first reduction of the heat output of the heat source (12), is set to a lower value than a second first threshold value (S₁₂), the overshooting of which triggers a second reduction of the heat output of the heat source (12).

8. Method according to any of claims 1 to 7, **characterised in that** the first variable represents substantially the temperature of the liquid in the region of the inlet region (24).

9. Method according to any of claims 1 to 8, **characterised in that** the second variable represents substantially the temperature of the liquid in the region of the outlet region (26).

10. Heating device, in particular for a motor vehicle, comprising:
- a heat source (12),
- a heat exchange zone (16) with a liquid inlet region (24) and a liquid outlet region (26) , wherein in the heat exchange zone (16) thermal energy provided by the heat source (12) may be transferred to liquid flowing from the liquid inlet region (24) to the liquid outlet region (26),
- a sensor arrangement (28, 30) for detecting a first variable, which is related to the temperature of the liquid at a more upstream region of the heat exchange zone (16), and a second variable, which is related to the temperature of the liquid at a more downstream region of the heat exchange zone (16),
- a control device for the heat source (12), wherein the control device comprises a differentiating element for generating a differential quantity (delta t) representing the difference between the first variable and the second variable and the control device is designed so as to adjust the heat output of the heat source at least on the basis of the differential quantity and the second variable and is designed so as to define at least one first threshold value (S₁₁, S₁₂) for the second variable and to vary the heat output when the second variable reaches the at least one first threshold value (S₁₁, S₁₂),
**characterised in that** the control device determines the at least one first threshold value (S₁₁, S₁₂) for the second variable as a function of the differential quantity (delta t).

11. Heating device according to claim 10, **characterised in that** the control device is designed so as to effect a method according to any of claims 1 to 9.

12. Heating device according to claim 10 or 11, **characterised in that** the sensor arrangement (28, 30) comprises a first temperature sensor (28) for generating a first sensor signal, which as the first variable represents substantially the temperature of the liquid in the region of the liquid inlet region (24), and a second temperature sensor (30) for generating a second sensor signal, which as the second variable represents substantially the temperature of the liquid in the region of the liquid outlet region (26).

13. Heating device according to claim 12, **characterised in that** the first temperature sensor (28) for detecting substantially the temperature of a housing (20), which delimits the heat exchange zone (16) at the side remote from the heat source (12), is provided in the region of the liquid inlet region (24).

14. Heating device according to claim 12, **characterised in that** the first temperature sensor (28) for detecting the temperature of the liquid flowing through the heat exchange zone (16) is provided in the region of the liquid inlet region (24).

15. Heating device according to any of claims 12 to 14, **characterised in that** the second temperature sensor (30) for detecting substantially the temperature of a housing (20), which delimits the heat exchange zone (16) at the side remote from the heat source (12), is provided in the region of the liquid outlet region (26).

16. Heating device according to any of claims 12 to 14, **characterised in that** the second temperature sensor (30) for detecting the temperature of the liquid flowing through the heat exchange zone (16) is provided in the region of the liquid outlet region (26).

17. Heating device according to any of claims 12 to 14, **characterised in that** the second temperature sensor (30) is provided for detecting substantially the temperature of a housing (18), which delimits the heat exchange zone (16) at the side facing the heat source (12).

## Revendications

1. Procédé destiné à faire fonctionner une installation de chauffage, en particulier pour un véhicule à moteur, laquelle installation comprend :
- une source de chaleur (12),
- une zone d'échangeur de chaleur (16) avec une zone d'entrée du liquide (24) et une zone de sortie du liquide (26), l'énergie calorifique produite par la source de chaleur (12) pouvant être transmise, dans la zone d'échangeur de chaleur (16), au liquide s'écoulant entre la zone d'entrée du liquide (24) et la zone de sortie du liquide (26),
- un dispositif de détecteurs (28, 30) pour la détection d'une première grandeur qui est en rapport avec la température du liquide dans une zone supérieure de la zone d'échangeur de chaleur (16) et d'une seconde grandeur qui est en rapport avec la température du liquide dans une zone inférieure de la zone d'échangeur de chaleur (16),
suivant lequel, sur la base de la première grandeur et de la seconde grandeur, une grandeur différentielle (delta t) reproduisant la différence entre la première et la seconde grandeur est déterminée et, au moins sur la base de la grandeur différentielle (delta t) et de la seconde grandeur, la puissance de chauffage de la source de chaleur (12) est influencée, moyennant quoi, lorsque la seconde grandeur atteint au moins une première valeur limite (S₁₁, S₁₂), la puissance de chauffage de la source de chaleur (12) est modifiée,
**caractérisé en ce que** la au moins première valeur limite (S₁₁, S₁₂) est déterminée en fonction de la grandeur différentielle (delta t).

2. Procédé selon la revendication 1, **caractérisé en ce qu'**au moins une seconde valeur limite (S₂₁, S₂₂) est prédéterminée pour la grandeur différentielle (delta t) et **en ce que**, lorsque la grandeur différentielle (delta t) atteint la au moins seconde valeur limite (S₂₁, S₂₂), la au moins première valeur limite (S₁₁, S₁₂) est modifiée.

3. Procédé selon la revendication 1 ou 2, **caractérisé en ce que** la au moins première valeur limite (S₁₁, S₁₂) est modifiée en continu en fonction de la grandeur différentielle (delta t) au moins par plages - par rapport à la plage de valeurs de la grandeur différentielle (delta t).

4. Procédé selon l'une des revendications 1 à 3, **caractérisé en ce que** la puissance de chauffage de la source de chaleur (12) diminue au fur et à mesure que la valeur de la grandeur différentielle (delta t) augmente.

5. Procédé selon la revendication 4, **caractérisé en ce que** la au moins première valeur limite (S₁₁, S₁₂) est réduite au fur et à mesure que la valeur de la grandeur différentielle (delta t) augmente.

6. Procédé selon l'une des revendications 1 à 5, **caractérisé en ce que** la source de chaleur (12) est mise hors service en cas de dépassement d'une première valeur (S₁₂).

7. Procédé selon l'une des revendications 1 à 6, **caractérisé en ce que**, dans au moins une plage de la plage de valeurs de la grandeur différentielle (delta t), une première valeur limite(S₁₁), dont le dépassement déclenche une première diminution de la puissance de chauffage de la source de chaleur (12), est fixée à une valeur inférieure à une seconde valeur limite(S₁₂), dont le dépassement déclenche une seconde diminution de la puissance de chauffage de la source de chaleur (12).

8. Procédé selon l'une des revendications 1 à 7, **caractérisé en ce que** la première grandeur reproduit sensiblement la température du liquide dans la zone de la zone d'entrée (24).

9. Procédé selon l'une des revendications 1 à 8, **caractérisé en ce que** la seconde grandeur reproduit sensiblement la température du liquide dans la zone de la zone de sortie (26).

10. Installation de chauffage, en particulier pour un véhicule à moteur, comprenant :
- une source de chaleur (12),
- une zone d'échangeur de chaleur (16) avec une zone d'entrée du liquide (24) et une zone de sortie du liquide (26), l'énergie calorifique produite par la source de chaleur (12) pouvant être transmise, dans la zone d'échangeur de chaleur (16), au liquide s'écoulant entre la zone d'entrée du liquide (24) et la zone de sortie du liquide (26).
- un dispositif de capteurs (28, 30) pour la détection d'une première grandeur qui est en rapport avec la température du liquide dans une zone supérieure de la zone d'échangeur de chaleur (16) et d'une seconde grandeur qui est en rapport avec la température du liquide dans une zone inférieure de la zone d'échangeur de chaleur (16),
- un dispositif de commande pour la source de chaleur (12), le dispositif de commande comportant un élément différentiel pour générer une grandeur différentielle (delta t) reproduisant la différence entre la première grandeur et la seconde grandeur et le dispositif de commande est conçu pour régler la puissance de chauffage de la source de chaleur au moins sur la base de la grandeur différentielle et il est conçu pour prédéterminer au moins une première valeur limite (S₁₁, S₁₂) pour la seconde grandeur et pour modifier la puissance de chauffage lorsque la seconde grandeur atteint la au moins première valeur limite (S₁₁, S₁₂), **caractérisée en ce que** le dispositif de commande détermine la au moins première valeur limite (S₁₁, S₁₂) pour la seconde grandeur en fonction de la grandeur différentielle (delta t).

11. Installation de chauffage selon la revendication 10, **caractérisée en ce que** le dispositif de commande est configuré par la mise en oeuvre d'un procédé selon l'une quelconque des revendications 1 à 9.

12. Installation de chauffage selon la revendication 10 ou 11, **caractérisée en ce que** le dispositif de détecteurs (28, 30) comprend un premier détecteur de température (28) pour générer un premier signal de détecteur reproduisant comme première grandeur sensiblement la température du liquide dans la zone de la zone d'entrée du liquide (24) et un second détecteur de température (30) pour générer un second signal de détecteur reproduisant comme seconde grandeur sensiblement la température du liquide dans la zone de la zone de sortie du liquide (26).

13. Installation de chauffage selon la revendication 12, **caractérisée en ce que** le premier détecteur de température (28) est prévu pour détecter sensiblement la température d'un boîtier (20) délimitant la zone d'échangeur de chaleur (16) du côté opposé à la source de chaleur (12) dans la zone de la zone d'entrée du liquide (24).

14. Installation de chauffage selon la revendication 12, **caractérisée en ce que** le premier détecteur de température (28) est prévu pour détecter la température du liquide s'écoulant à travers la zone d'échangeur de chaleur (16) dans la zone de la zone d'entrée du liquide (24).

15. Installation de chauffage selon l'une des revendications 12 à 14, **caractérisée en ce que** le second détecteur de température (30) est prévu pour détecter sensiblement la température d'un boîtier (20) délimitant la zone d'échangeur de chaleur (16) du côté opposé à la source de chaleur (12) dans la zone de la zone de sortie du liquide (26).

16. Installation de chauffage selon l'une des revendications 12 à 14, **caractérisée en ce que** le second détecteur de température (30) est prévu pour détecter la température du liquide s'écoulant à travers la zone d'échangeur de chaleur (16) dans la zone de la zone de sortie du liquide (26).

17. Installation de chauffage selon l'une des revendications 12 à 14, **caractérisée en ce que** le second détecteur de température (30) est prévu pour détecter sensiblement la température d'un boîtier (18) délimitant la zone d'échangeur de chaleur (16) du côté tourné vers la source de chaleur (12).
